# FASCICULE DE BREVET EUROPEEN

(11) **EP 3 286 457 B1**
(45) Date de publication et mention de la délivrance du brevet: **12.02.2020**
(21) Numéro de dépôt: 16725185.9
(22) Date de dépôt: 21.04.2016
(51) Int. Cl.: F16H 57/08, F02C 7/36, F16H 57/04

(54) **REDUCTEUR A TRAIN D'ENGRENAGES EPICYCLOÏDAL POUR UNE TURBOMACHINE**
UNTERSETZUNGSGETRIEBE MIT EINEM PLANETENGETRIEBE FÜR EINEN TURBINENMOTOR
REDUCTION GEAR HAVING AN EPICYCLIC GEAR TRAIN FOR A TURBINE ENGINE

(30) Priorité: 23.04.2015 FR 1553675
(43) Date de publication de la demande: 28.02.2018
(73) Titulaire: Safran Aircraft Engines, 75015 Paris (FR)
(72) Inventeur: LAO, Jérémy, Phorla, 77550 Moissy-Cramayel (FR); BELMONTE, Olivier, 77550 Moissy-Cramayel (FR); MOUTON, Clémentine, Charlotte, Marie, 77550 Moissy-Cramayel (FR); NGUYEN VAN, Thomas, Julien, 77550 Moissy-Cramayel (FR); PATSOURIS, Emmanuel, Pierre, Dimitri, 77550 Moissy-Cramayel (FR)
(74) Mandataire: Gevers & Orès
(86) Numéro de dépôt international: PCT/FR2016/050943
(87) Numéro de publication internationale: WO 2017/005997

(56) Documents cités:
- WO-A1-2013/124590
- FR-A1- 2 987 417
- GB-A- 2 493 834

## Description

### Domaine de l'invention :

La présente invention se rapporte au domaine des réducteurs à train épicycloïdal et, notamment quoique non exclusivement, à des réducteurs pour turbomachine à doublet d'hélices de propulsion contrarotatives. L'invention concerne plus particulièrement l'intégration de moyens de lubrification dans un réducteur à train d'engrenages épicycloïdal.

### Etat de la technique :

L'architecture des turbomachines à doublet d'hélices contrarotatives, désignées par l'expression anglaise « open rotor », se distingue de celle des turboréacteurs usuels par le fait que la soufflante est, non plus interne, mais externe et qu'elle se compose de deux hélices coaxiales et contrarotatives pouvant être situées en amont ou en aval du générateur de gaz. Une telle architecture engendre une moindre consommation de carburant comparativement aux turboréacteurs multiflux en service sur les aéronefs commerciaux.

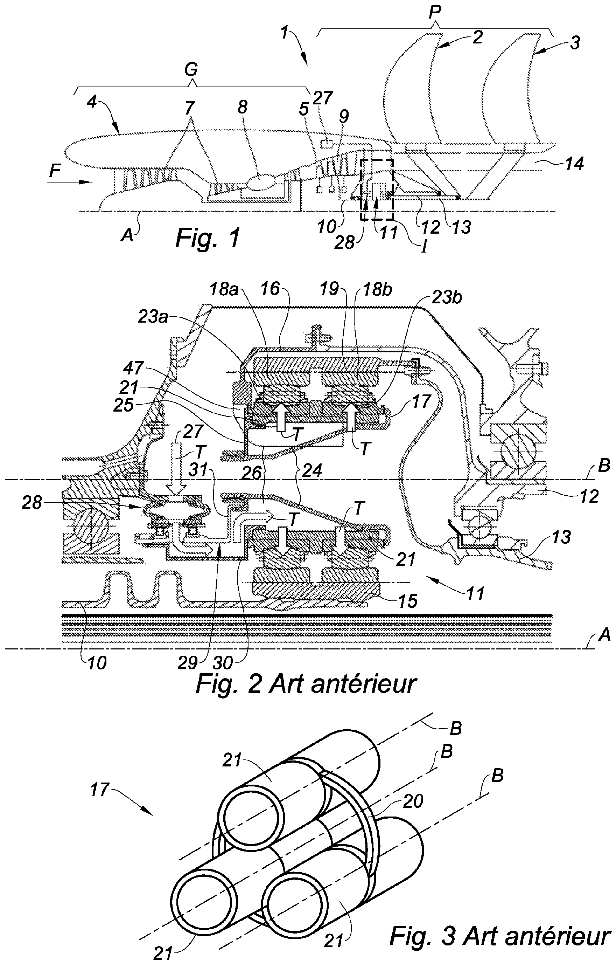

Comme le montre schématiquement la figure 1, un turbomoteur 1 à doublet d'hélices contrarotatives amont 2 et aval 3 comporte principalement, selon un axe longitudinal central A, deux parties distinctes : une partie générateur de gaz G et une partie propulseur P. La partie P prolonge, dans cet exemple de turbomoteur, la partie générateur de gaz G et la nacelle 4.

La partie générateur de gaz G du turbomoteur 1 comporte usuellement, d'amont en aval selon le sens d'écoulement, par rapport à l'axe A, du flux gazeux F entrant dans la nacelle 4 du turbomoteur, un ou deux compresseurs 7 selon l'architecture du générateur de gaz à simple ou double corps, une chambre annulaire de combustion 8, une ou plusieurs turbines 9 lié à des corps distincts selon ladite architecture. La partie propulseur comprend une turbine de puissance dont l'arbre 10 entraîne, par l'intermédiaire d'un dispositif de réduction de vitesses ou réducteur à train d'engrenages épicycloïdal 11 (désigné par l'acronyme anglais PGB pour Power Gear Box) et de façon contrarotative, les arbres concentriques et coaxiaux 12 et 13 des deux hélices amont 2 et aval 3 alignées, selon l'axe A du turbomoteur. Une tuyère 14 termine de façon usuelle le turbomoteur 1. Une telle architecture est présentée, par exemple, dans le brevet FR-A1- 2 955 085 et les demandes de brevet FR-A1-2 962 109 et FR-A1- 2 940 247. L'art antérieur comprend également les documents WO-A1-2013/124590, FR-A1-2987417 et GB-A-2 493834.

En fonctionnement et brièvement, le flux d'air F entrant dans le turbomoteur 1 est comprimé, puis mélangé à du carburant et brûlé dans la chambre de combustion 8. Les gaz de combustion engendrés passent ensuite dans la partie à turbines 9 pour entraîner en rotation inverse, via le réducteur épicycloïdal 11, les hélices 2, 3 qui fournissent la majeure partie de la poussée. Les gaz de combustion sont expulsés à travers la tuyère 14 augmentant ainsi la poussée du turbomoteur 1.

Le réducteur (PGB) 11 d'un open rotor a pour but de transformer la vitesse de rotation dite rapide de la turbine de puissance 9, dont on voit sur la figure 2, l'arbre de puissance 10 coopérant avec le planétaire 15 du réducteur 11, en deux vitesses distinctes dites lentes des deux hélices contrarotatives 3, 4. Pour cela, en référence à la figure 2, le réducteur différentiel 11 à train d'engrenages épicycloïdal comporte, par rapport à l'axe longitudinal A :
- Le planétaire 15 sous la forme d'une roue dentée, qui est montée par une liaison cannelée sur l'arbre de turbine 10 tournant dans un sens de rotation en entraînant le réducteur 11,
- des satellites 18, ici au nombre de trois disposés à 120° les uns des autres (seul l'un d'eux étant représenté sur la figure), qui sont formés par des roues dentées 18a, 18b, s'engrenant autour du planétaire 15 et qui sont reliés à un porte-satellites 16 tournant, en conséquence, dans un sens de rotation identique à l'arbre d'entrée, et
- une couronne externe 19 dentée, qui s'engrène avec les satellites 18 et qui tourne dans un sens de rotation inverse du planétaire 15, donc en sens inverse du porte-satellites 16.

L'exemple de la figure 2 présente un réducteur inversé 11, pour lequel l'arbre 12 de l'hélice amont 2 se termine, sur l'exemple présenté, par un bulbe annulaire, pour être solidaire en rotation du porte-satellites 16, et l'arbre 13 de l'hélice aval 3, est solidaire en rotation de la couronne dentée extérieure 19.

En référence aux figures 2 et 3, un réducteur à train épicycloïdal connu comporte un support-satellites 17 avec trois organes de support 21 individuels (un seul étant représenté sur la figure 2), maintenus solidaires entre eux par une pièce annulaire 20. Chaque organe de support 21 individuel a ici sensiblement la forme d'un tube cylindrique. Ces tubes cylindriques 21, au nombre de trois (trois satellites), sont parallèles et servent chacun à la rotation des roues 18a, 18b d'un satellite 18 autour d'un axe B lié au support individuel 20.

La surface externe de chaque tube cylindrique 21 possède une surépaisseur en son centre, séparant en deux parties le tube. Ces parties supportent ici deux bagues intérieures de paliers à roulements 23a, 23b identiques. Ces paliers 23a, 23b, permettent la rotation des roues dentées 18a, 18b, du satellite 18 autour de l'axe B.

Par ailleurs, les tubes cylindriques sont monoblocs, reliés par une pièce annulaire 20, sensiblement en leur milieu suivant l'axe B. Cette pièce annulaire 20 non représentée sur la figure 2 est boulonnée aux doigts 47 du porte-satellites 16, de manière à l'entraîner en rotation autour de l'axe A.

Le réducteur 11 a pour particularité de ne disposer d'aucun composant statique et est considéré comme un réducteur différentiel à train d'engrenages épicycloïdal avec, à son entrée, une vitesse de rotation initiale (celle de la turbine) et, à sa sortie, deux vitesses de rotation distinctes de sens contraire (celles des deux étages de soufflante).

Aussi, pour garantir un fonctionnement optimal et fiable du réducteur 11, il est indispensable d'acheminer de l'huile pour lubrifier et refroidir les composants roulants qui le constituent, compte tenu que ce réducteur est soumis aux différents efforts des arbres d'entrée (turbine) et de sortie (hélices) en subissant des sollicitations extérieures mécaniques et thermiques significatives engendrées par la turbomachine.

Pour cela, les deux parties de tube cylindrique 21 décrites précédemment sont percées radialement de trous régulièrement espacés sur leur circonférence en face de chaque palier 23a, 23b, pour permettre une circulation d'huile, notée par les flèches T sur la figure 2, vers ces paliers.

A l'intérieur de chaque organe de support 21, un axe satellite 24 axisymétrique et tronconique par rapport à l'axe B, débute en amont par une partie cylindrique de rayon nettement inférieur à celui du tube cylindrique 21 et rejoint la périphérie externe de l'organe de support 21 en aval. Cette pièce 24 se termine en aval par une bride qui dépasse radialement du cylindre 21 et qui permet de bloquer axialement vers l'aval le palier 23b.

En amont, une plaque 25, ayant sensiblement la forme d'un disque, ferme l'espace entre le tube cylindrique 21 et l'axe satellite 24. Elle permet également, en dépassant radialement du cylindre 21, de bloquer axialement vers l'amont le palier 23a. Par ailleurs la plaque 25 comporte une ouverture de type perçage dans sa partie la plus interne radialement par rapport à l'axe A du réducteur 11 afin de laisser circuler l'huile jusqu'aux paliers 23a et 23b (flèche T).

La plaque 25 et l'axe satellite 24 forment avec le cylindre 21, une cavité 26 mettant en communication l'ouverture de la plaque 25 avec les trous du cylindre 21. Lors du fonctionnement du réducteur, l'huile de lubrification, dont le parcours est indiqué par des flèches T, passe par l'ouverture de la plaque amont 25 et ressort de la cavité 26 par les trous du tube cylindrique 21, pour lubrifier les paliers avant de se répartir dans les engrenages et être ensuite évacuée par centrifugation. La forme particulière de la pièce interne 24 permet à l'huile de se répartir jusqu'aux trous les plus éloignés de l'ouverture d'entrée dans la cavité 26.

Les trois plaques (une plaque 24 par satellite 18), associées à la pièce cylindrique 30, forment le capot inférieur d'un dispositif de transfert d'huile 28, prévu pour transférer de l'huile provenant d'une source d'alimentation en huile 27 située dans la nacelle fixe 4 vers le référentiel tournant du porte-satellites 17.

Ce dispositif de transfert d'huile 28 repose directement sur la surface extérieure de la pièce cylindrique 31, appelée capot supérieur du dispositif 28. Ce capot supérieur 31 vient se fixer directement sur le capot inférieur formé par les trois plaques 25 et le cylindre 30. Les capots supérieur et inférieur forment alors une cavité 29 dans laquelle circule l'huile provenant du dispositif 28. L'ensemble des pièces 30, 31, 21, 25 et 24 permettent d'acheminer l'huile du dispositif 28 aux paliers 23a et 23b selon les flèches T.

La présence de plusieurs pièces, dont la pièce tronconique interne 24 dans chaque support individuel 20 alourdit le réducteur 11, ce qui va à l'encontre de l'objectif de réduction de masse, notamment pour les open rotors. Le volume des tuyaux, en particulier celui de la cavité 26, implique également la présence d'une masse d'huile superflue entraînée dans la rotation du support-satellites 17.

Par ailleurs, dans cette conception, des pièces dédiées à l'acheminement de l'huile se trouvent impliquées dans la reprise d'efforts et doivent donc être surdimensionnées par rapport à leur fonction de transfert d'huile.

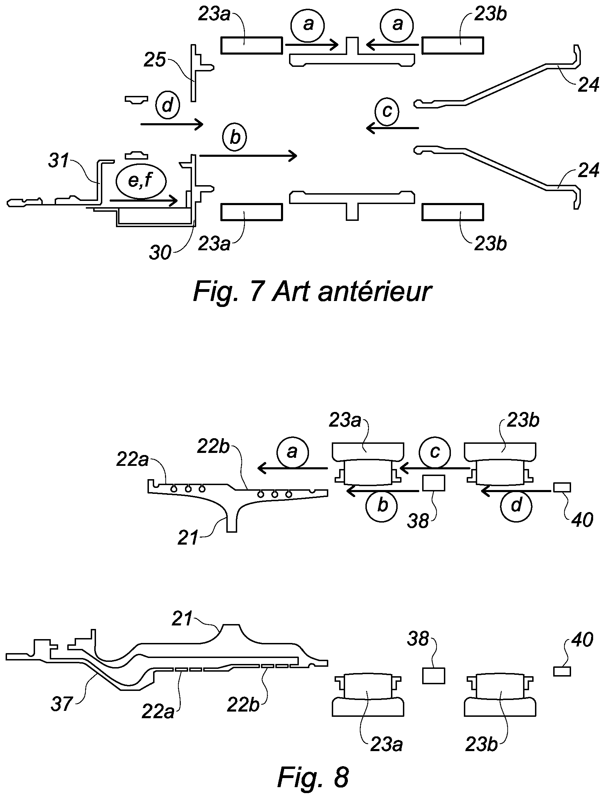

Enfin, l'assemblage du porte-satellites 17 et des satellites sur le porte-satellites est complexe à cause du nombre de pièces. En référence à la figure 7, sur l'exemple considéré, ce montage se fait en six étapes avec un nombre important de pièces. Une première étape a) consiste à installer, axialement par l'amont et par l'aval, les bagues internes des paliers 23a, 23b sur chaque partie cylindrique 21 du support-satellites 17. Dans une deuxième étape b), le capot inférieur (pièce monobloc constituée des parties 30 et 25) est assemblé au support-satellites 17, bloquant ainsi axialement les bagues inférieures de roulement 23a sur l'ensemble des satellites. Dans une troisième étape c), les pièces tronconiques 24 sont placés par l'aval en butée axiale contre les bagues intérieures de roulement 23b. Dans une quatrième étape d), les pièces tronconiques 24 sont boulonnées à la partie circulaire 25 du capot inférieur pour chaque satellite. Dans des cinquième e) et sixième f) étapes, le capot extérieur 31 de la cavité de circulation d'huile 29 est monté puis boulonné sur l'ensemble obtenu à l'étape d).

La présente invention a pour but d'apporter une solution aux inconvénients évoqués ci-dessus, en particulier en simplifiant la conception de l'ensemble. Elle est particulièrement adaptée à un réducteur à train d'engrenages épicycloïdal pour une turbomachine à hélice contrarotatives mais peut être utilisée pour d'autres types de réducteurs à train d'engrenages épicycloïdal, utilisés par exemple pour entrainer la soufflante d'une turbomachine à double flux, et ce, quelque soit le nombre de satellites du réducteur.

### Exposé de l'invention :

A cet effet, l'invention concerne un réducteur à train épicycloïdal pour une turbomachine, en particulier d'aéronef, comportant un arbre planétaire d'axe A de rotation, une couronne d'axe A s'étendant autour dudit arbre planétaire, des satellites répartis autour dudit axe A, qui sont engrenés avec ladite couronne et l'arbre planétaire, et un support-satellites comprenant, d'une part, des organes de support de paliers des satellites, d'axes de rotation B, qui sont régulièrement répartis autour de l'axe A, et d'autre part, une pièce maintenant chaque organe de support sensiblement par son milieu suivant son axe B, caractérisé en ce que lesdits organes de support sont formés d'une seule pièce avec des moyens d'alimentation en huile de lubrification desdits paliers.

En réalisant d'une seule pièce les organes de support des paliers avec leurs moyens d'alimentation en huile, on gagne en simplicité de montage. De plus, en supprimant la pièce qui formait, dans l'art antérieur, la paroi radialement interne de la chambre d'alimentation, on peut gagner en masse et en encombrement à l'intérieur de chaque organe.

Suivant une caractéristique de l'invention, les moyens d'alimentation en huile de lubrification desdits paliers sont formés dans la paroi de l'organe de support.

Suivant une autre caractéristique de l'invention, la pièce présente une extension axiale limitée configurée de manière à permettre son agencement entre les paliers.

Avantageusement, lesdits organes de support ont chacun une forme tubulaire creuse, de préférence de section transversale sensiblement circulaire sur sa périphérie extérieure Les moyens d'alimentation en huile des paliers dans les organes sont donc intégrés dans l'épaisseur du tube et libèrent l'espace intérieur du tube.

De préférence, lesdits moyens d'alimentation en huile de lubrification desdits paliers comportent au moins un canal externe de circulation d'huile de lubrification autour de l'axe B en communication avec la périphérie externe desdits organes de support.

Le canal externe, permet d'alimenter en huile de lubrification les paliers des satellites sur toute leur circonférence, en n'alimentant en huile la piste que sur une partie de cette circonférence, par les orifices de passage. De ce fait, il n'est plus nécessaire de prévoir de chambre interne agencé pour alimenter en huile de lubrification toute la circonférence et occupant une grande partie de l'espace interne au tube cylindrique de l'organe de support. On gagne en masse et en simplicité de montage par rapport à l'art antérieur.

De préférence, les canaux externes sont sensiblement dans un plan perpendiculaire à l'axe B et ont une section circulaire. Sur la circonférence de ces canaux sont répartis équitablement des perçages orientés vers les pistes des paliers de telle sorte que puisse être injecté l'huile de lubrification.

Avantageusement, lesdits organes comportent chacun au moins un conduit intégré agencé pour mettre en communication ledit au moins un canal externe avec un élément de distribution d'huile de lubrification aux organes de support

Avantageusement, lesdits organes de support sont formés d'une seule pièce entre eux et avec un élément tubulaire de distribution d'huile de lubrification, qui s'étend autour dudit axe A et qui comprend une conduite annulaire de distribution d'huile aux organes de support.

Avantageusement, ledit élément tubulaire de distribution d'huile de lubrification comporte une interface pour un dispositif de transfert d'huile entre une source fixe d'huile par rapport à la turbomachine et le support-satellites, en rotation autour de l'axe A.

De manière préférentielle, ladite interface est agencée de manière à faire entrer l'huile radialement dans la conduite interne dudit élément tubulaire de distribution d'huile de lubrification.

Avantageusement, ladite conduite communique avec ladite chambre intégrée de chacun desdits organes.

Avantageusement, ledit élément tubulaire est relié par une de ses extrémités longitudinales à l'une des extrémités longitudinales de chacun desdits organes de support.

Cela permet, notamment, de situer l'arrivée de la conduite interne dudit élément tubulaire de distribution d'huile de lubrification au niveau de la partie de chaque organe la plus proche de l'axe A.

De préférence, chaque organe de support supporte deux paliers, associés respectivement à deux roues de satellites.

Avantageusement, chaque organe de support comporte deux pistes, agencées chacune pour supporter au moins un palier de satellite, et ayant des diamètres différents. Cela permet de monter axialement deux paliers sur l'organe par une même extrémité longitudinale dudit organe, notamment pour monter deux roues dentées espacées constituant le satellite correspondant audit organe.

Avantageusement, la pièce de maintien est une pièce distincte des organes de support.

De préférence, cette pièce de maintien comporte comprend pour chaque organe de support, une couronne entourant ce dernier entre les deux pistes.

La couronne rapportée de chaque organe de support, permet de solidariser ensemble lesdits organes du support-satellites de manière à transmettre un couple à un arbre de sortie, notamment d'hélice ou de soufflante. De plus, le fait que la couronne soit rapportée permet un montage simple du satellite en installant axialement, de manière successive, le palier amont, la couronne, puis le palier aval.

L'invention concerne aussi une turbomachine comportant un réducteur tel que décrit précédemment.

L'invention concerne aussi un procédé de réalisation d'un réducteur tel que décrit précédemment, caractérisé en ce que les paliers et la pièce de maintien sont montés sur les organes de support par des translations ayant toutes le même sens suivant les axes B.

Grâce aux caractéristiques dudit réducteur on gagne ainsi en simplicité de montage et en accessibilité pour la maintenance.

### Brève description des figures :

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
- la figure 1 est une vue schématique en demi-coupe longitudinale d'une turbomachine à doublet d'hélices contrarotatives, telle qu'un « open rotor » ;
- la figure 2 représente, selon une demi-coupe longitudinale détaillée de la partie I de la figure 1, un exemple de réalisation d'un réducteur à train d'engrenages épicycloïdal selon l'art antérieur ;
- la figure 3 représente en perspective, une vue schématique d'un support-satellites selon l'art antérieur utilisé dans le réducteur à train d'engrenages épicycloïdal de la figure 2 ;
- la figure 4 représente, selon une demi-coupe longitudinale détaillée de la partie I de la figure 1, un exemple de réalisation d'un réducteur à train d'engrenages épicycloïdal selon l'invention ;
- la figure 5 montre, en perspective partielle, les principaux éléments d'un réducteur à train d'engrenages épicycloïdal selon l'invention ;
- la figure 6 représente en perspective, une vue schématique d'un support-satellites utilisé dans le réducteur à train d'engrenages épicycloïdal de la figure 4;
- la figure 7 montre schématiquement les étapes de montage d'un porte - satellites pour un réducteur à train d'engrenages épicycloïdal selon l'art antérieur ; et
- la figure 8 montre schématiquement les étapes de montage d'un porte - satellites pour un réducteur à train d'engrenages épicycloïdal selon l'invention.

On notera que les éléments remplissant des fonctions identiques sont référencés avec les mêmes numéros sur les différentes figures.

### Description d'un mode de réalisation :

L'invention concerne notamment un réducteur à train épicycloïdal dans une turbomachine à doublet d'hélices contrarotatives, « open rotor », telle que celle présentée précédemment, en référence à la figure 1.

On notera cependant que cet exemple n'est pas limitatif, la description de l'invention qui suit peut être facilement adaptée par l'homme du métier par exemple au cas d'un réducteur à train d'engrenages épicycloïdal pour l'entrainement d'une soufflante dans une turbomachine à double flux.

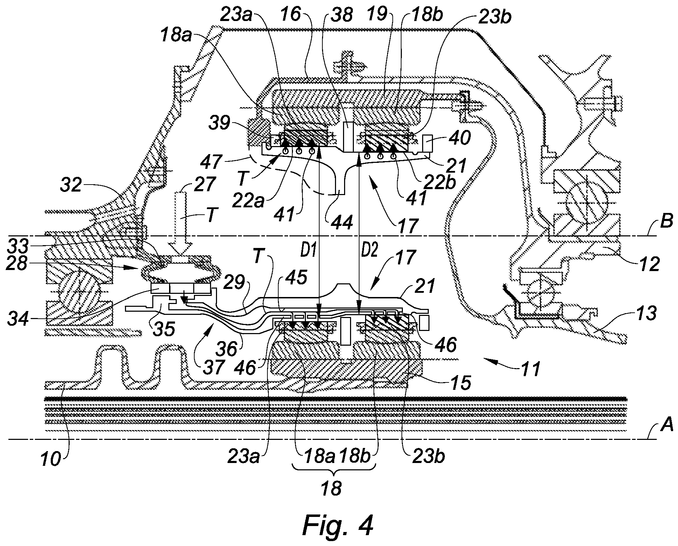

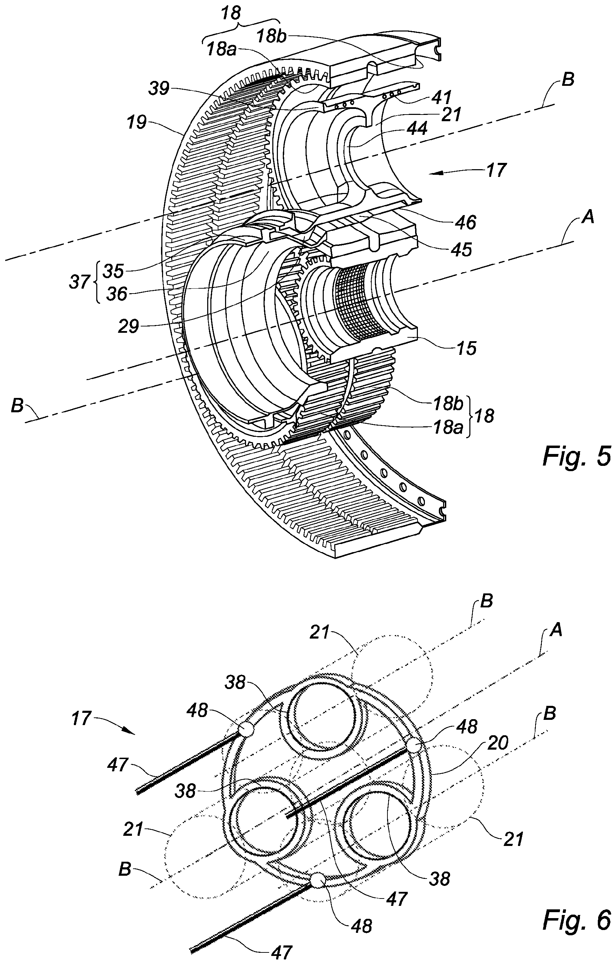

Ici, l'architecture générale du réducteur est semblable à celle qui a été décrite plus haut. En référence à la figure 4, le réducteur différentiel 11 à train d'engrenages épicycloïdal comporte, par rapport à l'axe longitudinal A de la turbomachine :
- un arbre d'entrée planétaire 15, d'axe A de rotation, sous la forme d'une roue dentée, qui est montée par une liaison cannelée sur l'arbre de turbine 10 tournant dans un sens de rotation en entraînant le réducteur 11,
- des satellites 18, ici au nombre de trois disposés à 120° les uns des autres (deux étant représentés sur la figure 5), qui sont formés chacun par deux roues dentées 18a, 18b, s'engrenant autour de l'arbre d'entrée 15 et qui sont supportés par un support-satellites 17 tournant, en conséquence, dans un sens de rotation identique à l'arbre d'entrée 15, et
- une couronne externe 19 dentée, qui s'engrène avec les roues dentées 18a, 18b, des satellites 18 et qui tourne dans le sens inverse de rotation de l'arbre d'entrée 15, donc en sens inverse du porte-satellites 16.

Le côté aval du réducteur 11 étant tourné vers les hélices 2, 3, l'arbre 12 de l'hélice amont 2 se termine par un bulbe annulaire, pour être solidaire en rotation du porte-satellites 16 relié au support-satellites 17, tandis que l'arbre 13 de l'hélice aval 3, est solidaire en rotation de la couronne dentée extérieure 19.

En référence aux figures 5 et 6, le support-satellites 17 comporte ici trois organes de support 21 des satellites 18, définissant chacun un axe B de rotation desdits satellites 18, parallèles à l'axe A et régulièrement répartis à 120° les uns des autres, autour dudit axe A. Plus précisément, les organes de support présentent chacune extension axiale suivant l'axe B. Le réducteur comprend également une pièce 20, 38 maintenant chaque organe de support 21 sensiblement par le milieu de son extension axiale. Ces organes de support 21 sont ici constitués par des tubes creux essentiellement cylindrique 21 autour de chaque axe A, maintenus solidaires entre eux par une bride annulaire 20. L'organe de support 21 est préférentiellement fabriqué par un procédé de fabrication additive.

La bride annulaire 20 comporte une couronne de liaison 38 associée à chaque tube cylindrique 21 agencée de manière à maintenir chaque tube cylindrique 21 sensiblement par le milieu de son extension axiale. En d'autres termes, nous comprenons que chaque couronne 38 maintient un tube cylindrique 21 sensiblement au milieu de sa longueur. La couronne de liaison 38 entoure la surface externe de chaque tube cylindrique 21, de manière à être placée entre les roues amont 18a et aval 18b du satellite. Comme nous pouvons le voir sur la figure 6, la bride annulaire 20 et la couronne de liaison 38 présentent une extension axiale limitée ou réduite. L'extension axiale limitée de la couronne de liaison 38 et de la bride annulaire 20 est configurée de manière à permettre son agencement entre des paliers 23a et 23b décrits ci-après. En d'autres termes, la bride annulaire 20 et la couronne 38 ont une forme quasiment plate (faible épaisseur). Cette forme simple facilite la fabrication par des procédés conventionnels tels que la forge. D'autre part, leurs extension et volume sont restreints de manière à limiter la masse de celles-ci. Cette configuration nécessite également peu d'usinage. L'épaisseur est également limitée ou faible par rapport aux autres pièces constituant le réducteur 11, et notamment de l'extension axiale du tube cylindrique 21. Par ailleurs, la bride annulaire 20 et la couronne de liaison 38 sont réalisées dans un matériau dimensionné pour transmettre les efforts des satellites.

Dans un mode de réalisation illustré sur la figure 5, des doigts 47 relient le porte-satellites 16 à la bride annulaire 20 du support-satellites 17, entre les tubes cylindriques 21. Les doigts 47 sont préférentiellement fixés à la bride annulaire 20 par des rotules 48 pour former un montage isostatique.

Dans une variante de réalisation, non représentée, les doigts 47 peuvent passer à l'intérieur des tubes cylindriques et être fixés, également de préférence par une liaison rotule sensiblement au milieu des tubes cylindriques 21, au niveau des couronnes de liaison 38. En effet, comme cela ressort de la suite de la description, l'intérieur des tubes cylindriques 21 est dégagé et laisse un passage pour les doigts 47, dans le réducteur 11 selon l'invention, Par ailleurs, la surface radialement interne de chaque tube cylindrique 21 peut présenter une nervure 44, sensiblement en son milieu suivant l'axe B, favorisant sa tenue mécanique et pouvant servir d'attache pour la fixation des doigts 47.

Chaque organe de support tubulaire 21 sert de support à des paliers 23a, 23b des satellites 18 correspondants. Ici, un palier amont 23a et un palier aval 23b permettent respectivement la rotation de roues dentées amont 18a et aval 18b de chaque satellite 18 autour de l'axe B.

Sur l'exemple présenté, il s'agit de paliers 23a, 23b comprenant chacun une bague interne centrée sur le tube cylindrique 21, une bague externe centrée sur une roue dentée 18a, 18b, permettant la rotation des roues dentées autour du tube cylindrique 21.

La surface radialement externe de chaque tube cylindrique 21 comporte ici une piste cylindrique amont 22a, ayant un premier diamètre D1, et une piste cylindrique aval 22b, ayant un second diamètre D2 légèrement inférieur à D1. La piste cylindrique amont 22a supporte la bague interne du palier 23a amont, tandis que la piste cylindrique aval 22b supporte la bague interne du palier 23b aval.

Les paliers 23a, 23b sont des paliers à éléments roulants tels que des billes, des rouleaux ou des aiguilles. Préférentiellement, mais non limitativement, les éléments sont des rouleaux tonneaux (contrairement à des rouleaux droits).

On notera à ce propos, que la couronne de liaison 38 a un diamètre interne correspondant au diamètre interne D2 de la piste aval 22a. Lorsque le support-satellites 17 est assemblé, la couronne de liaison 38 est donc positionnée en butée à l'interface entre les pistes amont 22a et aval 22b, entre les deux paliers, 23a et 23b. De cette manière, la bride 20 peut passer entre les paliers amont 23a et aval 23b, ainsi qu'entre les roues dentées amont 18a et aval 18b, pour solidariser les couronnes de liaison 38.

Le support-satellites 17 conforme à l'invention, illustré en détail en regard des figures 4 et 5, permet d'amener l'huile de lubrification aux éléments tournants 23a, 23b, 18a, 18b, en périphérie des tubes cylindrique 21. On a symbolisé le trajet de l'huile par des flèches T.

Comme dans l'état de l'art précédemment décrit, un dispositif de transfert d'huile 28 est ici prévu pour transférer l'huile à partir d'une source d'alimentation en huile 27 située dans la nacelle fixe 4 vers le référentiel tournant du support-satellites 17. Le dispositif 28 se trouve dans un espace interne annulaire du turbomoteur 1, situé autour de l'arbre de turbine 10 et délimité entre un carter fixe 32 et le côté amont du réducteur 11 à train épicycloïdal.

En référence à la figure 4, le dispositif de transfert 28 comporte principalement deux bagues concentriques externe 33 et interne 34 espacées radialement l'une de l'autre, la bague externe 33 étant fixée à un carter statique 32 de la turbomachine et la bague interne 34 étant fixée au support-satellites 17 du réducteur 11.

Pour passer la rotation entre la bague externe fixe 33 liée au carter statique 32 (référentiel fixe) et la bague interne tournante 34 liée au support-satellites 17 (référentiel rotatif), des paliers, lisses ou à roulements, sont agencés entre les bagues. Avantageusement on utilise des paliers à éléments roulant. On choisit en général des rouleaux sphérique en coopération avec des dentures droites ou des rouleaux cylindrique en coopération avec des dentures en chevron ou hélicoïdale pour ne réaliser un maintien en position axial des satellites par rapport au planétaire et à la couronne mais sans rendre le système hyperstatique.

La bague externe 33 est raccordée à une canalisation d'alimentation sortant de la source d'huile 27 et comporte une ouverture permettant un passage radial de l'huile au travers d'elle.

Des moyens, ne faisant pas partie de l'invention, raccordent les bagues externe 33 et interne 34 entre elles et sont agencés pour laisser passer l'huile vers la bague interne 34.

La bague interne 34 est elle-même percée d'ouvertures radiales pour laisser passer l'huile.

Une pièce tubulaire intermédiaire 37 autour de l'axe A du réducteur 11, ou boîtier de répartition d'huile, solidaire du support-satellites rotatif 17, est destinée à acheminer l'huile sortant de la bague interne 34 du dispositif de transfert 28 vers chaque tube cylindrique 21.

Le boîtier de répartition d'huile 37 comporte une partie amont 35 de forme sensiblement cylindrique autour de l'axe A, qui supporte la bague interne 34 sur sa périphérie externe. Une partie aval 36 forme la liaison avec chaque tube cylindrique 21.

Dans l'épaisseur du boîtier de répartition d'huile 37, une cavité 29 est aménagée pour former une conduite acheminant l'huile de l'aval vers l'amont. Cette conduite 29 est annulaire au moins dans la partie amont 35 du boîtier 37. La conduite 29 débouche sur la périphérie externe de la partie amont 35 de manière à être en communication avec les orifices de la bague interne 34 du dispositif de transfert d'huile 28. La conduite 29 débouche également aux extrémités libres de la partie aval 36, à l'intérieur de chaque tube cylindrique 21.

De préférence, l'ensemble du boîtier de répartition d'huile 37 reste radialement proche de l'arbre d'entrée 15. La conduite 29 débouche donc en aval au niveau de la partie des tubes cylindriques 21 la plus proche de l'axe A du réducteur 11.

Chaque tube cylindrique 21 a une épaisseur sensiblement constante sur sa circonférence, sauf dans sa partie la plus proche de l'axe A du réducteur 11. Au niveau de cette partie, un conduit interne 45 est ménagé dans l'épaisseur du tube cylindrique 21 et communique, à son extrémité amont, avec l'ouverture aval correspondante de la conduite interne 29 du boîtier de répartition 37. Le conduit interne 45 est situé dans un secteur angulaire limité du tube cylindrique, de part et d'autre du plan passant par l'axe B du tube cylindrique 21 et l'axe A du réducteur 11. Il présente ici une symétrie autour de ce plan. Dans une variante, ce conduit interne 45 peut être multiple pour répartir l'huile de manière plus homogène sur un secteur angulaire.

Le conduit 45 s'étend axialement sensiblement sur toute la longueur du tube cylindrique 21, notamment il s'étend devant les deux paliers 23a, 23b. Il est fermé latéralement et en aval.

La paroi radialement interne du conduit 45 par rapport à l'axe B a sensiblement la même épaisseur que celle du tube cylindrique 21, en dehors du conduit 45, et participe à la tenue mécanique du tube cylindrique, ainsi qu'à la liaison avec le boîtier de répartition 37.

Ici, l'extension radiale du conduit interne 45 a une valeur sensiblement égale à celle de l'épaisseur du tube cylindrique 21. De ce fait, le tube cylindrique 21 forme une pièce tubulaire dont l'espace interne est largement dégagé.

La paroi radialement externe du conduit interne 45 par rapport à l'axe B se situe, quant à elle, dans la continuité de la surface externe du tube cylindrique. Son épaisseur est adaptée pour supporter les paliers 23a, 23b.

La paroi radialement externe du conduit interne 45 est traversée par des orifices 46 sensiblement radiaux, mettant le conduit interne 45 en communication avec la surface externe du tube cylindrique 21, au niveau des pistes amont 22a et aval 22b des paliers de roulement 23a, 23b.

De ce fait, l'huile venant du boîtier de répartition 37, dont le trajet est symbolisé par les flèches T, entre par l'amont dans le conduit 45 et sort sur la surface externe du tube cylindrique par les orifices 46. Il fait partie de l'expérience de l'homme du métier d'ajuster la forme du conduit 45 et/ou des orifices 46 pour répartir le flux d'huile arrivant à la surface du tube cylindrique de manière sensiblement homogène en face des paliers 23a, 23b.

Les pistes amont 22a et aval 22b du tube cylindrique 21 comportent plusieurs canaux 41 circonférentiels, espacés axialement et disposés de telle sorte qu'il y en ait plusieurs devant chaque palier 23a, 23b, par exemple au moins trois. En d'autres termes, les canaux 41 sont formés dans la paroi du tube cylindrique 21 et en particulier dans l'épaisseur de celui-ci.

Ces canaux 41 sont ici dans des plans sensiblement perpendiculaires à l'axe A. De plus, ils sont disposés de manière à communiquer avec les orifices 46 de sortie d'huile du conduit interne 45. Sur l'exemple présenté, les orifices 46 peuvent être des fentes radiales sur lesquelles arrivent les canaux 41. Dans une variante, les canaux 41 peuvent faire le tour complet du cylindre 21 et les orifices 46 débouchent au fond des canaux 41, ces derniers ayant, par exemple, une forme sécante au conduit 45.

De cette manière, l'huile sortant de chaque orifice 46, pour une part va directement dans la partie du palier 23a, 23b située en face de l'orifice 46 et, pour une autre part, s'écoule dans le canal 41 qui communique avec ledit orifice 46.

Les canaux 41 ont par exemple une section transversale O, ouverte ponctuellement ou une section transversale en U ouverte continuellement sur la surface externe du tube cylindrique 21. Cette section est adaptée pour favoriser la circulation circonférentielle de l'huile autour du tube cylindrique dans le canal 41, tout en permettant à l'huile de s'échapper, de manière régulière sensiblement sur la circonférence, vers les paliers 23a, 23b par l'ouverture du canal sur la surface externe. Ce phénomène est favorisé par les effets conjugués de la centrifugation résultant de la rotation du support-satellites 17 et de l'entraînement des roulements autour du tube cylindrique 21.

Selon des processus et des moyens connus, ne faisant pas partie de l'invention, l'huile atteignant les paliers 23a, 23b, les traverse pour lubrifier les engrenages entre chaque satellite 18 et la roue dentée 19, puis est évacuée du réducteur 11.

On notera par ailleurs que, sur l'exemple présenté, le tube cylindrique 21 comprend en partie intégrante, une bride amont 39 à l'extrémité de la partie amont de la surface externe, et qu'un écrou 40 est fixé en aval de la partie aval de la surface externe. Cette bride amont 39 et cet écrou aval 40 forment des butées axiales qui maintiennent en position les paliers 23a, 23b et la couronne de liaison 38.

De manière préférée, le boîtier de répartition 29 et les tubes cylindriques 21 peuvent être réalisés d'un seul tenant, par exemple par forgeage. Dans tous les cas, l'ensemble forme une pièce facilitant le montage du support-satellites 17. En référence à la figure 8, ce montage se fait en quatre étapes, correspondant toutes à un montage des pièces sur les tubes cylindriques 21 par une translation suivant l'axe B, de l'aval vers l'amont, en utilisant de préférence un ensemble intégré formé du boîtier de répartition d'huile 37 et , ici, des trois tubes cylindriques 21 de support des satellites.

Une première étape a) consiste à installer les paliers amont 23a sur la piste amont 22a de chaque tube cylindrique 21, en les introduisant par le côté aval des tubes cylindriques 21, qui est libre alors que le côté amont est bloqué par la présence du boîtier de répartition 37.

Dans une deuxième étape b), la bride 20 est installée en introduisant les couronnes de liaison 38 par le côté aval des tubes cylindriques 21, puis en les faisant glisser de manière à les positionner à l'interface entre la piste amont 22a et la piste aval 22b de chaque tube cylindrique 21.

Dans une troisième étape c), les paliers aval 23b sont installés sur la piste aval 22b de chaque tube cylindrique 21, toujours en passant par l'extrémité aval.

Dans une quatrième étape d), un écrou 40, butée axiale pour les paliers 23a, 23b et la couronne de liaison 38, est serré à l'extrémité aval de chaque tube cylindrique 21.

Ainsi, grâce aux pistes des paliers qui n'ont pas le même diamètre et grâce à l'espace dégagé dans les tubes cylindriques 21, on peut assembler le support-satellites du réducteur avec moins de pièces et que d'un seul côté. Il en résulte donc une diminution de manipulation des pièces et du nombre d'étapes nécessaires au montage par rapport aux systèmes conventionnels. La bride de maintien 20 et ses couronnes 38 sont facilement accessibles. Ne pas avoir besoin d'accéder aux deux côtés facilite la maintenance du réducteur car, dans ce cas on peut laisser une partie du support-satellites et des satellites montée sur le reste du module pour ne changer que certaines pièces.

## Revendications

1. Réducteur (11) à train épicycloïdal pour une turbomachine (1), en particulier d'aéronef, comportant :
- un arbre planétaire (15) d'axe A de rotation,
- une couronne (19) d'axe A s'étendant autour dudit arbre planétaire (15),
- des satellites (18a, 18b) répartis autour dudit axe A, qui sont engrenés avec ladite couronne (19) et l'arbre planétaire (15), et
- un support-satellites (17) comprenant, d'une part, des organes de support (21) de paliers (23a, 23b) des satellites (18a, 18b), les organes de support présentant une extension axiale suivant l'axe de rotation B et sont régulièrement répartis autour de l'axe A, et d'autre part, une pièce (20-38) maintenant chaque organe de support (21),
**caractérisé en ce que** la pièce (20-38) maintient chaque organe de support (21) sensiblement par le milieu de son extension axiale suivant son axe B, et lesdits organes de support (21) sont formés d'une seule pièce avec des moyens (45, 46, 41) d'alimentation en huile de lubrification desdits paliers (23a, 23b).

2. Réducteur (11) selon la revendication 1, dans lequel les moyens (45, 46, 41) d'alimentation en huile de lubrification desdits paliers (23a, 23b) sont formés dans la paroi de l'organe de support (21).

3. Réducteur (11) selon la revendication 1 ou 2, dans lequel la pièce (20-38) présente une extension axiale limitée configurée de manière à permettre son agencement entre les paliers (23a, 23b).

4. Réducteur (11) selon la revendication 1 ou 2, dans lequel lesdits organes de support (21) ont chacun une forme tubulaire creuse, de préférence de section transversale sensiblement circulaire sur sa périphérie extérieure.

5. Réducteur (11) selon l'une des revendications précédentes, dans lequel lesdits moyens (45, 46, 41) d'alimentation en huile de lubrification desdits paliers (23a, 23b) comportent au moins un canal externe (41) de circulation d'huile de lubrification autour de l'axe B en communication avec la périphérie externe desdits organes de support (21).

6. Réducteur (11) selon l'une des revendications précédentes, dans lequel lesdits organes de support (21) sont formés d'une seule pièce entre eux et avec un élément tubulaire de distribution d'huile de lubrification (29), qui s'étend autour dudit axe A et qui comprend une conduite annulaire (37) de distribution d'huile aux organes de support (21).

7. Réducteur (11) selon la revendication précédente, dans lequel ledit élément tubulaire (29) est relié par une de ses extrémités longitudinales à l'une des extrémités longitudinales de chacun desdits organes de support (21).

8. Réducteur (11) selon l'une des revendications précédentes, dans lequel chaque organe de support (21) comporte deux pistes (22a, 22b), agencées chacune pour supporter au moins un palier de satellite (23a, 23b), et ayant des diamètres (D2, D1) différents.

9. Réducteur (11) selon l'une des revendications précédentes, dans lequel la pièce de maintien (20, 38) est une pièce distincte des organes de support (21).

10. Réducteur (11) selon les revendication 8 et 9, dans lequel la pièce de maintien (20, 38) comprend pour chaque organe de support (21), une couronne (38) entourant ce dernier entre les deux pistes (22a, 22b).

11. Turbomachine (1), **caractérisée en ce qu'**elle comprend au moins un réducteur (11) selon l'une des revendications précédentes.

12. Procédé de réalisation d'un réducteur (11) selon la revendication 10, **caractérisé en ce que** les paliers (23a, 23b) et la pièce de maintien (20, 38) sont montés sur les organes de support (21) par des translations ayant toutes le même sens suivant les axes B.

## Patentansprüche

1. Reduktor (11) mit Planetengetriebe für eine Turbomaschine (1), insbesondere eines Luftfahrzeugs, Folgendes umfassend:
- eine Planetenwelle (15) mit Rotationsachse A,
- einen Kranz (19) mit Achse A, der sich um die Planetenwelle (15) erstreckt,
- Satellitenräder (18a, 18b), die um die Achse A verteilt sind, die in den Kranz (19) und in die Planetenwelle (15) eingreifen, und
- einen Satellitenräder-Träger (17), der einerseits Stützorgane (21) von Lagern (23a, 23b) der Satellitenräder (18a, 18b) umfasst, wobei die Stützorgane eine axiale Ausdehnung entlang der Rotationsachse B aufweisen und regelmäßig um die Achse A verteilt sind, und andererseits ein Teil (20-38), das jedes Stützorgan (21) hält,
**dadurch gekennzeichnet, dass** das Teil (20-38) jedes Stützorgan (21) im Wesentlichen durch die Mitte seiner axialen Ausdehnung entlang seiner Achse B hält, und die Stützorgane (21) aus einem einzigen Teil mit Schmierölversorgungsmitteln (45, 46, 41) der Lager (23a, 23b) gebildet sind.

2. Reduktor (11) nach Anspruch 1, wobei die Schmierölversorgungsmittel (45, 46, 41) der Lager (23a, 23b) in der Wand des Stützorgans (21) gebildet sind.

3. Reduktor (11) nach Anspruch 1 oder 2, wobei das Teil (20-38) eine begrenzte axiale Ausdehnung aufweist, die derart konfiguriert ist, dass sie seine Einrichtung zwischen den Lagern (23a, 23b) erlaubt.

4. Reduktor (11) nach Anspruch 1 oder 2, wobei die Stützorgane (21) jeweils eine hohle Röhrenform, bevorzugt mit im Wesentlichen kreisförmigem Querschnitt, auf ihrem Außenumfang aufweisen.

5. Reduktor (11) nach einem der vorstehenden Ansprüche, wobei die Schmierölversorgungsmittel (45, 46, 41) der Lager (23a, 23b) mindestens einen externen Kanal (41) zur Schmierölzirkulation um die Achse B in Kommunikation mit dem Außenumfang der Stützorgane (21) umfassen.

6. Reduktor (11) nach einem der vorstehenden Ansprüche, wobei die Stützorgane (21) aus einem einzigen Teil miteinander und mit einem röhrenförmigen Schmierölverteilungselement (29), das sich um die Achse A erstreckt und eine Ringleitung (37) zum Verteilen von Öl an die Stützorgane (21) umfasst, gebildet sind.

7. Reduktor (11) nach dem vorstehenden Anspruch, wobei das Röhrenelement (29) durch eines seiner Längsenden mit einem der Längsenden jedes der Stützorgane (21) verbunden ist.

8. Reduktor (11) nach einem der vorstehenden Ansprüche, wobei jedes Stützorgan (21) zwei Bahnen (22a, 22b) umfasst, die jeweils eingerichtet sind, um mindestens ein Satellitenradlager (23a, 23b) zu tragen und die unterschiedliche Durchmesser (D2, D1) aufweisen.

9. Reduktor (11) nach einem der vorstehenden Ansprüche, wobei das Halteteil (20, 38) ein Teil ist, das von den Stützorganen (21) separat ist.

10. Reduktor (11) nach den Ansprüchen 8 und 9, wobei das Halteteil (20, 38) für jedes Stützorgan (21) einen Kranz (38) umfasst, der dieses Letztere zwischen den zwei Bahnen (22a, 22b) umgibt.

11. Turbomaschine (1), **dadurch gekennzeichnet, dass** sie mindestens einen Reduktor (11) nach einem der vorstehenden Ansprüche umfasst.

12. Verfahren zum Herstellen eines Reduktors (11) nach Anspruch 10, **dadurch gekennzeichnet, dass** die Lager (23a, 23b) und das Halteteil (20, 38) auf die Stützorgane (21) durch Translationen montiert sind, die alle dieselbe Richtung entlang den Achsen B aufweisen.

## Claims

1. Reduction gear (11) with epicyclic gear train for a turbine engine (1), in particular for an aircraft, comprising
- a planetary shaft (15) having a rotation axis A,
- a ring (19) having an axis A extending around said planetary shaft (15),
- planet gears (18a, 18b) distributed around said axis A, which are meshed with said ring (19) and the planetary shaft (15), and
- a planet support (17) comprising members (21) for supporting bearings (23a, 23b) of the planet gears (18a, 18b), the supporting members having an axial extension along the rotation axis B and being evenly distributed around the axis A, and a part (20-38) holding each supporting member (21),
**characterised in that** the part (20-38) holds each supporting member (21) substantially by the middle of the axial extension thereof along the axis B thereof, and said supporting members (21) are formed in a single piece with means (45, 46, 41) for supplying said bearings (23a, 23b) with lubricating oil.

2. Reduction gear (11) according to claim 1, wherein the means (45, 46, 41) for supplying said bearings (23a, 23b) with lubricating oil are formed in the wall of the supporting member (21).

3. Reduction gear (11) according to either claim 1 or claim 2, wherein the part (20-38) has a limited axial extension configured so as to allow the arrangement thereof between the bearings (23a, 23b).

4. Reduction gear (11) according to either claim 1 or claim 2, wherein said supporting members (21) each have a hollow tubular shape, preferably with a substantially circular cross section over the external periphery thereof.

5. Reduction gear (11) according to any of the preceding claims, wherein said means (45, 46, 41) for supplying said bearings (23a, 23b) with lubricating oil comprise at least one external channel (41) for circulating lubricating oil around the axis B in communication with the external periphery of said supporting members (21).

6. Reduction gear (11) according to any of the preceding claims, wherein said supporting members (21) are formed in a single piece with each other and with a tubular lubricating oil-distribution element (29), which extends around said axis A and which comprises an annular duct (37) for distributing oil to the supporting members (21).

7. Reduction gear (11) according to the preceding claim, wherein said tubular element (29) is connected by one of the longitudinal ends thereof to one of the longitudinal ends of each of said supporting members (21).

8. Reduction gear (11) according to any of the preceding claims, wherein each supporting member (21) comprises two raceways (22a, 22b), each arranged so as to support at least one planet-gear bearing (23a, 23b), and having different diameters (D2, D1).

9. Reduction gear (11) according to any of the preceding claims, wherein the holding part (20, 38) is a part distinct from the supporting members (21).

10. Reduction gear (11) according to claims 8 and 9, wherein the holding part (20, 38) comprises, for each supporting member (21), a ring (38) surrounding the latter between the two raceways (22a, 22b).

11. Turbine engine (1), **characterised in that** it comprises at least one reduction gear (11) according to any of the preceding claims.

12. Method for producing a reduction gear (11) according to claim 10, **characterised in that** the bearings (23a, 23b) and the holding part (20, 38) are mounted on the supporting members (1) by translations all in the same direction along the axes B.
